# EUROPEAN PATENT APPLICATION

(11) **EP 4 304 147 A1**
(43) Date of publication of application: **10.01.2024**
(21) Application number: 23182220.6
(22) Date of filing: 28.06.2023
(51) Int. Cl.: H04L 45/24, H04L 45/28, H04L 47/34, H04L 1/08, H04W 76/15

(54) **PACKET SEQUENCING AND DEDUPLICATION IN MULTIPATH WIRELESS NETWORKS**

(30) Priority: 05.07.2022 US 202263358383 P; 09.12.2022 US 202218078219
(71) Applicant: Cisco Technology, Inc., San Jose, CA 95134-1706 (US)
(72) Inventor: CHANDRA, Rupak, Fremont, 94539 (US); ERTA, Alessandro, 54016 Licciana Nardi (IT); CHEN, Xiaoguang Jason, San Jose, 95129 (US)
(74) Representative: Warren, Caroline Elisabeth

(57) **Abstract**

In some embodiments, a device in a network receives a packet from a sender that is destined for a receiver. The device forms duplicate packets of the packet. The device assigns a sequence number to the duplicate packets based on an identity of the sender and on a flow identifier associated with the packet. The device sends the duplicate packets with the sequence number via different paths in the network towards the receiver.

## Description

### TECHNICAL FIELD

The present disclosure relates generally to computer networks, and, more particularly, to packet sequencing and deduplication in multipath wireless networks.

### BACKGROUND

As wireless access points become increasingly ubiquitous, more and more access points are being deployed in non-traditional settings, such as industrial and transportation settings. For instance, some mines now rely on wireless network deployments to monitor the mining process and the fleet of vehicles moving throughout a mine. This allows the operator of the mine to quickly identify problems, such as a broken down truck or other issues that may arise. Similarly, factory and warehouse operators are increasingly relying on wireless networks to control their devices, such as mobile robots, sensors and actuators, and the like.

In contrast to wireless networks deployed to traditional locations (e.g., office buildings, schools, etc.), non-traditional wireless network deployments may be subject to various conditions that can affect the radio frequency (RF) signals in the area. For instance, the high presence of metal in a mine could lead to severe signal degradation and blockage. In addition, nodes in these networks (e.g., trucks, trains, etc.) may be highly dynamic as they move throughout the area. This can also lead to signal fading and congestion due to interference. In extreme cases, the environmental factors can impinge on the wireless communications to such a degree that the controlled process is interrupted. Indeed, if a controlled node is unable to communicate with the wireless network, that node will be unable to receive control commands or report data back to its supervisory service.

### BRIEF DESCRIPTION OF THE DRAWINGS

The embodiments herein may be better understood by referring to the following description in conjunction with the accompanying drawings in which like reference numerals indicate identically or functionally similar elements, of which:
FIG. 1 illustrate an example computer network;
FIG. 2 illustrates an example network device/node;
FIG. 3 illustrates an example industrial wireless network deployed in a mine;
FIG. 4 illustrates an example industrial wireless network deployed in a warehouse;
FIGS. 5A-5B illustrates examples of multipath communications in a wireless network;
FIG. 6 illustrates an example of the deduplication of packets;
FIG. 7 illustrates an example of per-host, per-flow packet sequencing;
FIGS. 8A-8B illustrate examples comparing single aggregated packet sequencing to flow-based packet sequencing; and
FIG. 9 illustrates an example simplified procedure for packet sequencing and deduplication in multipath wireless networks.

### DESCRIPTION OF EXAMPLE EMBODIMENTS

### Overview

Aspects of the invention are set out in the independent claims and preferred features are set out in the dependent claims. Features of one aspect may be applied to each aspect alone or in combination with other aspects. In particular, means may be provided for implemented features of the method aspect as set out in the dependent claims in conjunction with the apparatus and computer program aspects.

According to one or more embodiments of the disclosure, a device in a network receives a packet from a sender that is destined for a receiver. The device forms duplicate packets of the packet. The device assigns a sequence number to the duplicate packets based on an identity of the sender and on a flow identifier associated with the packet. The device sends the duplicate packets with the sequence number via different paths in the network towards the receiver.

### Description

A computer network is a geographically distributed collection of nodes interconnected by communication links and segments for transporting data between end nodes, such as personal computers and workstations, or other devices, such as sensors, etc. Many types of networks are available, ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC), and others. Other types of networks, such as field area networks (FANs), neighborhood area networks (NANs), personal area networks (PANs), etc. may also make up the components of any given computer network.

In various embodiments, computer networks may include an Internet of Things network. Loosely, the term "Internet of Things" or "IoT" (or "Internet of Everything" or "IoE") refers to uniquely identifiable objects (things) and their virtual representations in a network-based architecture. In particular, the IoT involves the ability to connect more than just computers and communications devices, but rather the ability to connect "objects" in general, such as lights, appliances, vehicles, heating, ventilating, and air-conditioning (HVAC), windows and window shades and blinds, doors, locks, etc. The "Internet of Things" thus generally refers to the interconnection of objects (e.g., smart objects), such as sensors and actuators, over a computer network (e.g., via IP), which may be the public Internet or a private network.

Often, IoT networks operate within a shared-media mesh networks, such as wireless or PLC networks, etc., and are often on what is referred to as Low-Power and Lossy Networks (LLNs), which are a class of network in which both the routers and their interconnect are constrained. That is, LLN devices/routers typically operate with constraints, e.g., processing power, memory, and/or energy (battery), and their interconnects are characterized by, illustratively, high loss rates, low data rates, and/or instability. IoT networks are comprised of anything from a few dozen to thousands or even millions of devices, and support point-to-point traffic (between devices inside the network), point-to-multipoint traffic (from a central control point such as a root node to a subset of devices inside the network), and multipoint-to-point traffic (from devices inside the network towards a central control point).

Edge computing is a distributed approach of cloud implementation that acts as an intermediate layer from local networks (e.g., IoT networks) to the cloud (e.g., centralized and/or shared resources, as will be understood by those skilled in the art). That is, generally, edge computing entails using devices at the network edge to provide application services, including computation, networking, and storage, to the local nodes in the network, in contrast to cloud-based approaches that rely on remote data centers/cloud environments for the services. To this end, an edge node is a functional node that is deployed close to edge endpoints to provide computing, storage, and networking resources and services. Multiple edge nodes organized or configured together form a edge system, to implement a particular solution. Edge nodes and edge systems can have the same or complementary capabilities, in various implementations. That is, each individual edge node does not have to implement the entire spectrum of capabilities. Instead, the edge capabilities may be distributed across multiple edge nodes and systems, which may collaborate to help each other to provide the desired services. In other words, a edge system can include any number of virtualized services and/or data stores that are spread across the distributed edge nodes. This may include a supervisor-supervisee configuration, publish-subscribe configuration, or peer-to-peer configuration.

Low power and Lossy Networks (LLNs), e.g., certain sensor networks, may be used in a myriad of applications such as for "Smart Grid" and "Smart Cities." A number of challenges in LLNs have been presented, such as:
1) Links are generally lossy, such that a Packet Delivery Rate/Ratio (PDR) can dramatically vary due to various sources of interferences, e.g., considerably affecting the bit error rate (BER);
2) Links are generally low bandwidth, such that control plane traffic must generally be bounded and negligible compared to the low rate data traffic;
3) There are a number of use cases that require specifying a set of link and node metrics, some of them being dynamic, thus requiring specific smoothing functions to avoid routing instability, considerably draining bandwidth and energy;
4) Constraint-routing may be required by some applications, e.g., to establish routing paths that will avoid non-encrypted links, nodes running low on energy, etc.;
5) Scale of the networks may become very large, e.g., on the order of several thousands to millions of nodes; and
6) Nodes may be constrained with a low memory, a reduced processing capability, a low power supply (e.g., battery).

In other words, LLNs are a class of network in which both the routers and their interconnect are constrained: LLN routers typically operate with constraints, e.g., processing power, memory, and/or energy (battery), and their interconnects are characterized by, illustratively, high loss rates, low data rates, and/or instability. LLNs are comprised of anything from a few dozen and up to thousands or even millions of LLN routers, and support point-to-point traffic (between devices inside the LLN), point-to-multipoint traffic (from a central control point to a subset of devices inside the LLN) and multipoint-to-point traffic (from devices inside the LLN towards a central control point).

An example implementation of LLNs is an "Internet of Things" network. Loosely, the term "Internet of Things" or "IoT" may be used by those in the art to refer to uniquely identifiable objects (things) and their virtual representations in a network-based architecture. In particular, the next frontier in the evolution of the Internet is the ability to connect more than just computers and communications devices, but rather the ability to connect "objects" in general, such as lights, appliances, vehicles, HVAC (heating, ventilating, and air-conditioning), windows and window shades and blinds, doors, locks, etc. The "Internet of Things" thus generally refers to the interconnection of objects (e.g., smart objects), such as sensors and actuators, over a computer network (e.g., IP), which may be the Public Internet or a private network. Such devices have been used in the industry for decades, usually in the form of non-IP or proprietary protocols that are connected to IP networks by way of protocol translation gateways. With the emergence of a myriad of applications, such as the smart grid advanced metering infrastructure (AMI), smart cities, and building and industrial automation, and cars (e.g., that can interconnect millions of objects for sensing things like power quality, tire pressure, and temperature and that can actuate engines and lights), it has been of the utmost importance to extend the IP protocol suite for these networks.

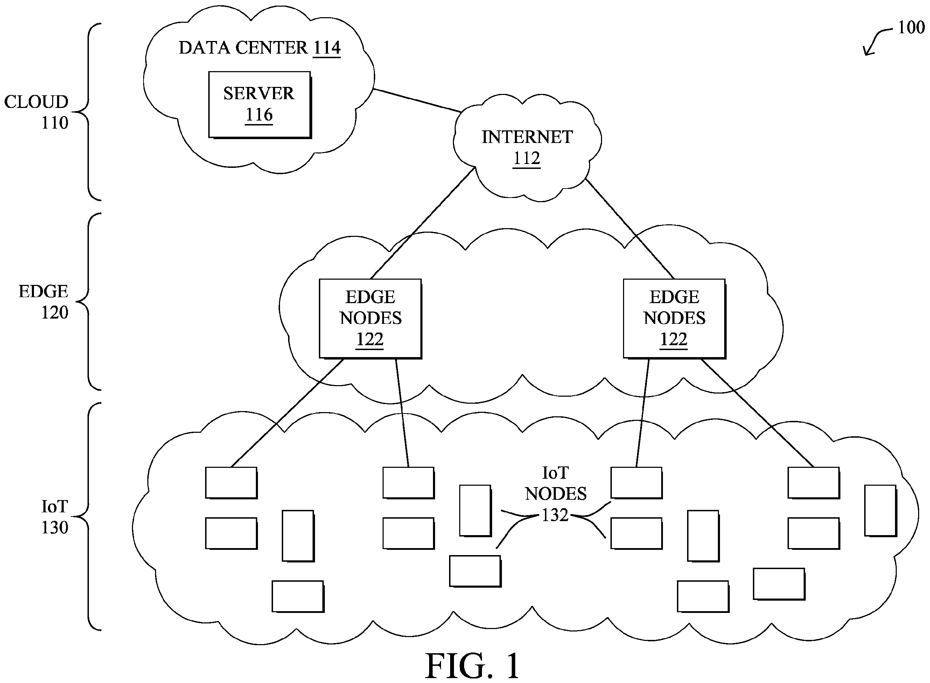

FIG. 1 is a schematic block diagram of an example simplified computer network 100 illustratively comprising nodes/devices at various levels of the network, interconnected by various methods of communication. For instance, the links may be wired links or shared media (e.g., wireless links, PLC links, etc.) where certain nodes, such as, e.g., routers, sensors, computers, etc., may be in communication with other devices, e.g., based on connectivity, distance, signal strength, current operational status, location, etc.

Specifically, as shown in the example network 100, three illustrative layers are shown, namely cloud layer 110, edge layer 120, and IoT device layer 130. Illustratively, the cloud layer 110 may comprise general connectivity via the Internet 112, and may contain one or more datacenters 114 with one or more centralized servers 116 or other devices, as will be appreciated by those skilled in the art. Within the edge layer 120, various edge nodes/devices 122 (e.g., with edge modules, described below) may execute various edge computing resources on network edge devices, as opposed to datacenter/cloud-based servers or on the endpoint nodes 132 themselves of the IoT device layer 130. For example, edge nodes/devices 122 may include edge routers and/or other networking devices that provide connectivity between cloud layer 110 and IoT device layer 130. Data packets (e.g., traffic and/or messages sent between the devices/nodes) may be exchanged among the nodes/devices of the computer network 100 using predefined network communication protocols such as certain known wired protocols, wireless protocols, powerline communication protocols, or other shared-media protocols where appropriate. In this context, a protocol consists of a set of rules defining how the nodes interact with each other.

Those skilled in the art will understand that any number of nodes, devices, links, etc. may be used in the computer network, and that the view shown herein is for simplicity. Also, those skilled in the art will further understand that while the network is shown in a certain orientation, the network 100 is merely an example illustration that is not meant to limit the disclosure.

Data packets (e.g., traffic and/or messages) may be exchanged among the nodes/devices of the computer network 100 using predefined network communication protocols such as certain known wired protocols, wireless protocols (e.g., IEEE Std. 802.15.4, Wi-Fi, Bluetooth^{®}, DECT-Ultra Low Energy, LoRa, etc..), PLC protocols, or other shared-media protocols where appropriate. In this context, a protocol consists of a set of rules defining how the nodes interact with each other.

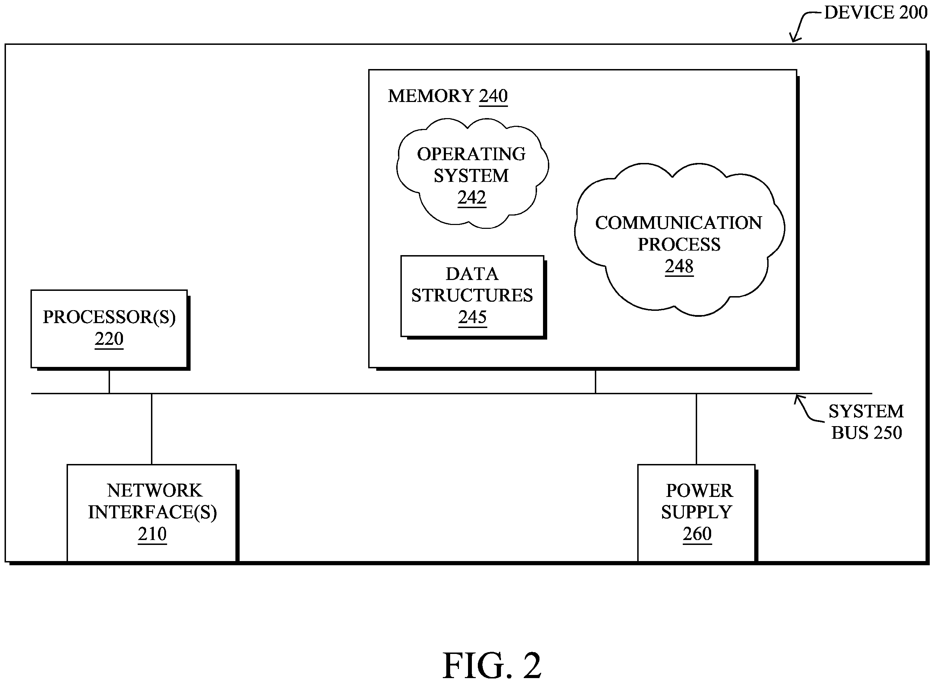

FIG. 2 is a schematic block diagram of an example node/device 200 (e.g., an apparatus) that may be used with one or more embodiments described herein, e.g., as any of the nodes or devices shown in FIG. 1 above or described in further detail below. The device 200 may comprise one or more network interfaces 210 (e.g., wired, wireless, PLC, etc.), at least one processor 220, and a memory 240 interconnected by a system bus 250, as well as a power supply 260 (e.g., battery, plug-in, etc.).

Network interface(s) 210 include the mechanical, electrical, and signaling circuitry for communicating data over links coupled to the network. The network interfaces 210 may be configured to transmit and/or receive data using a variety of different communication protocols, such as TCP/IP, UDP, etc. Note that the device 200 may have multiple different types of network connections, e.g., wireless and wired/physical connections, and that the view herein is merely for illustration. Also, while the network interface 210 is shown separately from power supply 260, for PLC the network interface 210 may communicate through the power supply 260, or may be an integral component of the power supply. In some specific configurations the PLC signal may be coupled to the power line feeding into the power supply.

The memory 240 comprises a plurality of storage locations that are addressable by the processor 220 and the network interfaces 210 for storing software programs and data structures associated with the embodiments described herein. The processor 220 may comprise hardware elements or hardware logic adapted to execute the software programs and manipulate the data structures 245. An operating system 242, portions of which are typically resident in memory 240 and executed by the processor, functionally organizes the device by, among other things, invoking operations in support of software processes and/or services executing on the device. These software processes / services may comprise an illustrative communication process 248, as described herein. Note that while communication process 248 is shown in centralized memory 240 alternative embodiments provide for the process to be specifically operated within the network interface(s) 210.

It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process). Further, while the processes have been shown separately, those skilled in the art will appreciate that processes may be routines or modules within other processes.

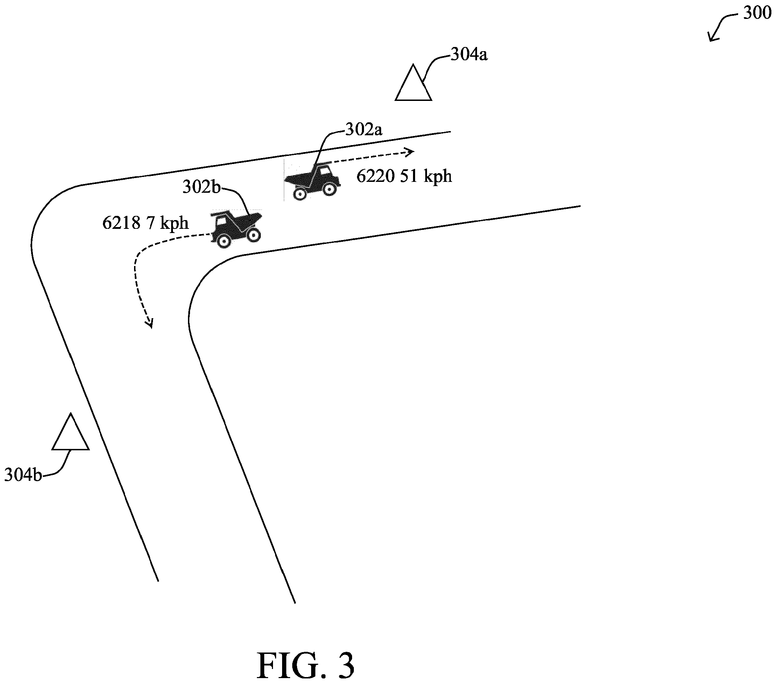

As noted above, many IoT networks are implemented as wireless meshes. For instance, FIG. 3 illustrates an example industrial network 300. As shown, a number of vehicles 302a-302b may be deployed to the location of industrial network 300. For example, if the deployment location of industrial network 300 is a mine, vehicles 302a-302b may be autonomous trucks or carts. Each of vehicles 302a-302b may include its own hardwired network, such as a Controller Area Network (CAN) Bus, Ethernet, or the like, that allow the various components of the vehicle to communicate with one another. For example, a plurality of sensors on vehicle 302a may send sensor readings to an onboard navigation system that controls the steering and acceleration of vehicle 302a within the deployment location of wireless network 300 via a local, hardwired network of vehicle 302a.

Distributed throughout the deployment location of wireless network 300 may be any number of wireless access points 304, such as wireless access points 304a-304b, that form a wireless mesh network. In some embodiments, the access points 304 may be autonomous access points that self-organize into a wireless mesh. For example, certain access points 304 may function as mesh access points (MAPs) and arrange themselves into a wireless mesh rooted at a root access point (RAP). In alternative deployments, access points 304a-304b may be connected to one another, and/or a supervisory device, via a hardwired network backend.

Preferably, each of the mobile nodes in wireless network 300, such as vehicles 302a-302b, may include a plurality of radios/transceivers. This allows a particular vehicle 302 to attach/associate to a particular access point 304 using a first one of its radios/transceivers over a certain wireless channel (e.g., form a link with that access point). In addition, the additional radio(s) of the vehicle 302 may also form links with the same access point 304 on a different channel and/or with one or more other access points 304. For instance, as shown, vehicle 302b may communicate with access point 304a using a first radio and may also communicate with access point 304b using a different radio. Doing so affords vehicle 302b multiple communication paths to the backend infrastructure through the use of spatially diverse access points 304.

The process by which a vehicle 302 detaches from an access point 304 and attaches to a different access point 304 is known as roaming. This process may be repeated any number of times, as a vehicle 302 moves throughout the area. Typically, the decision to roam from the current access point 304 being used by a vehicle 302 to another access point 304 is made by comparing the radio signal quality metrics for the access points to one or more roaming thresholds. Notably, if the received signal strength indicator (RSSI), signal-to-noise (SNR) ratio, or the like, crosses the roaming threshold, the vehicle 302 may roam to another access point 304. For example, as vehicle 302b moves away from access point 304a, its measured RSSI with access point 304a may drop below the defined roaming threshold, leading vehicle 302b to roam to another access point 304, such as access point 304b.

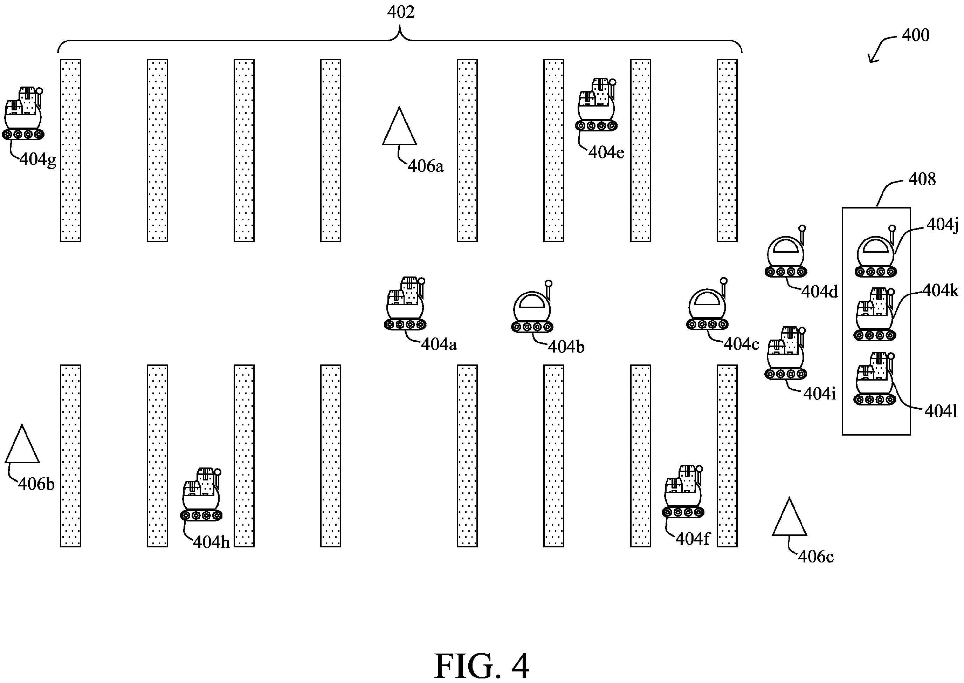

FIG. 4 illustrates another example of an industrial wireless network deployed in a warehouse 400, in various embodiments. As shown, assume that a plurality of inventory racks 402 are distributed throughout warehouse 400 and located for purposes of storing items. As would be appreciated, inventory racks 402 are optional and other forms of storage systems may be deployed throughout warehouse 400, in other cases. For instance, warehouse 400 may also include containers, holding pens, or the like, in which various items may be stored.

To aid in the storage and/or retrieval of the items in the warehouse, any number of mobile robots 404 may be deployed, such as mobile robots 402a-4041 shown. In general, each mobile robot 404 may include a propulsion system that propels the robot (e.g., an engine coupled to wheels, treads, etc.), one or more sensor systems (e.g., infrared, sonar, video, etc.), a communication system (e.g., wireless, hardwired port, etc.), and a computer control system coupled to the other systems that provides supervisory control over the other systems. In some embodiments, mobile robots 404 may also include mechanisms to automatically load and/or unload items, such as forklifts, mechanical claws, or the like. In other embodiments, mobile robots 404 may require the assistance of human workers to load and unload items to and from them, such as at a pack-out area 408.

In some instances, mobile robots 404 may be partially or fully autonomous, allowing them to complete their tasks, independently. For instance, a particular mobile robot 404 may be sent a task list that indicates the set of items that the robot is to retrieve from within warehouse 400, navigation information if so needed, or any other information that may be required for the performance of its retrieval functions. To this end, warehouse 400 may also include a wireless network that comprises access points 406, such as access points 406a-406c.

Similar to the example in FIG. 3, each mobile robot 404 in FIG. 4 may include a plurality of radios/transceivers, thereby allowing them to communicate with multiple access points 406 (or different radios of the same access point). This allows a given mobile robot 404 to leverage multiple communication paths with the backend infrastructure.

As noted above, non-traditional deployment locations for wireless networks, such as in the examples of FIGS. 3-4, typically experience conditions that are not present in more traditional locations, such as office buildings, schools, etc. Indeed, non-traditional wireless network deployments may be subject to various conditions that can affect the radio frequency (RF) signals in the area. For instance, the high presence of metal in a mine could lead to severe signal degradation and blockage. In addition, nodes in these networks (e.g., trucks, trains, etc.) may be highly dynamic as they move throughout the area. This can also lead to signal fading and congestion due to interference. In extreme cases, the environmental factors can impinge on the wireless communications to such a degree that the controlled process is interrupted. Indeed, if a controlled node is unable to communicate with the wireless network, that node will be unable to receive control commands or report data back to its supervisory service.

Of course, the non-traditional environments in FIGS. 3-4 are exemplary only and the techniques introduced herein may be applied to any number of other forms of network deployments. For instance, the techniques herein may be used within other non-traditional deployment locations, such as railways, roadways, runways, factories, and the like, where RF conditions may compromise the reliability of the network, as well as in traditional deployment locations, as desired.

In addition, when utilizing multiple radios to provide ultra-reliable wireless communications to a mobile node, another observation can also be made: the duplication of packets over multiple paths for increased diversity also has the effect of increasing the airtime utilization. Indeed, this increase will be by a factor of N, where N is the number of different paths (and radios of the mobile node) that are used. With many such mobile nodes in the area, this may greatly increase the potential for collisions between wireless communications.

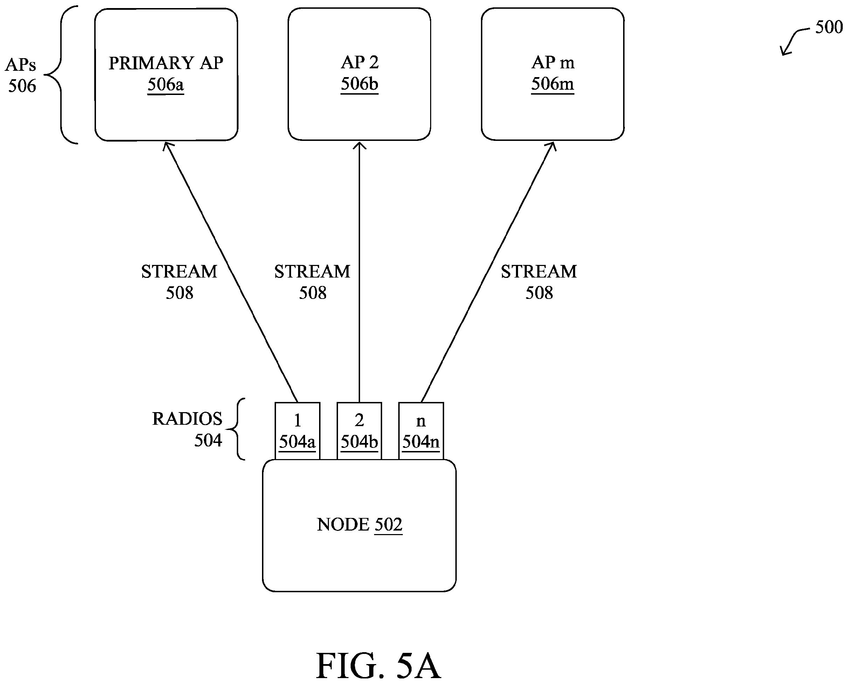

FIG. 5A illustrates an example of multipath communications in a wireless network 500, according to various embodiments. As shown, assume that there is a node 502, such as one of the mobile nodes shown in FIGS. 3-4 or any other node/client of wireless network 500, that comprises a plurality of radios 504 (e.g., a 1^{st} through n^{th} radio). In addition, assume that the infrastructure of wireless network 500 includes access points (APs) 506 (e.g., a 1^{st} through m^{th} AP). Depending on the location of node 502, its movement (if any), and the locations of APs 506, node 502 may be within communication range of any or all of APs 506 shown.

For purposes of illustration of the techniques herein, assume that a first radio 504a within radios 504 of node 502 is wirelessly connected to a first/primary AP 506a within APs 506. Typically, this association may be made in part based on the RSSI, SNR, or other RF characteristics measured between radio 504a and AP 506a. For instance, AP 506a may periodically send out beacons that announce its presence to any nodes within range. In turn, a receiving node, such as node 502, may assess the RF or other characteristics of that beacon and respond with an association request, to associate radio 504a with AP 506a.

Now, assume that there is a stream 508 of data packets that node 502 is to send. Rather than simply sending the packets of stream 508 to a single AP, such as AP 506a, sending duplicated/replicated copies of those packets to any or all of APs 506 greatly increases the chances of at least one copy of a given packet being received. For example, if a given packet is lost during transmission to AP 506a, a copy of that packet may still be received by AP 506b, due to the spatial diversity of APs 506 and the different wireless paths.

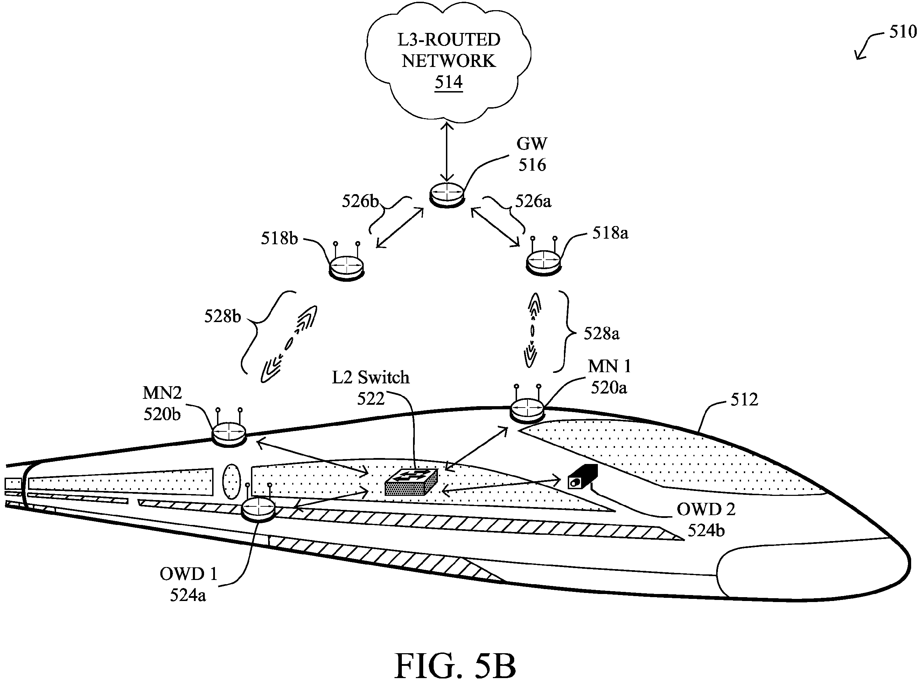

FIG. 5B illustrates another example 510 of a mobile system communicating wirelessly, according to various embodiments. As shown, the mobile system 512 may generally take the form of any mobile object or set of objects equipped with its own internal network and configured to communicate wirelessly with a backhauling system during motion. For instance, mobile system 512 may take the form of a train, bus, airplane or other flying vehicle, ferry, automobile, mine cart, crane, truck, another form of vehicle that may be used for transportation or shipping, a vehicle that may be found in a worksite, mining location, industrial site, factory, etc., a robot, or the like. In further cases, mobile system 512 may be a fully-autonomous, or partially-autonomous, vehicle or other system that moves with little or no direct human control.

Onboard mobile system 512 may be various networking devices that support the mobile domain of mobile system 512. In some embodiments, as shown, there may be a Layer-2 (L2) switch 522 onboard mobile system 512 that is connected to any number of onboard devices 524 within the mobile domain of mobile system 512. For instance, onboard device 524a may take the form of an onboard Wi-Fi access point that provides connectivity to any number of user devices (e.g., mobile phones, computers, etc.) of passengers being transported by mobile system 512. Conversely, onboard device 524b may take the form of a security camera that is also connected to L2 switch 522. In various embodiments, some or all of the onboard devices 524 may be onboard wired devices (OWDs), meaning that they communicate with L2 switch 522 via wired connections, such as an Ethernet network or the like.

According to various embodiments, the mobile domain of mobile system 512 may also include one or more mobile nodes 520, denoted "MN" in the Figures for simplicity. In some instances, a mobile node 520 onboard mobile system 512 may take a form similar to that of node 502 shown in FIG. 5A and form multiple wireless connections with multiple access points via its radios.

In other embodiments, there may be multiple mobile nodes 520 distributed on mobile system 512, such as when the size of mobile system 512 is such that different portions of mobile system 512 are expected to experience different wireless performance with different access points (e.g., as in the case of a long train going around a curve in the track. For instance, as shown, mobile system 512 may include a first mobile node 520a and a second mobile node 520b. Each mobile node 520 may generally include: 1.) a wireless interface to exchange data with wireless access points of the backhaul network and 2.) a local interface to exchange data with the local network of mobile system 512. For instance, mobile node 520a and mobile node 520b may each have a wired connection to L2 switch 522.

As would be appreciated, mobile node 520a and mobile node 520b may be located on mobile system 512 at a distance from one another, so as to provide spatial diversity to the potential wireless connection points utilized by mobile system 512. For example, mobile node 520a may be located near the front of mobile system 512 (e.g., the head-end of a train), while mobile node 520b may be located farther towards the rear of mobile system 512 than that of mobile node 520a. Thus, even if a particular mobile node 520 does not have a reliable wireless connection to the backhaul system, another mobile node 520 of mobile system 512 may (e.g., if the train is going around a curve in the track, etc.). In some instances, mobile nodes 520 may also offer frequency diversity, as well, such as by operating on different frequencies, at least part of the time. As a result, even if one frequency is experiencing interference, the other frequency could be used to form a wireless connection between mobile system 512 and the backhaul system. Regardless of the number of mobile nodes 520 positioned on mobile system 512, they may be viewed as a singular, distributed device for purposes of implementing the techniques herein.

Located along the path of travel of mobile system 512 (e.g., a railroad track, a road, a waterway, a runway, etc.) may be any number of wireless base stations/access points 518. For instance, as shown, there may be trackside access points 518a-518b shown. Note that while these wireless access points are referred to herein as 'trackside,' their locations can be varied depending on the deployment scenario (e.g., roadside, etc.).

During operation, access points 518a-518b may form wireless connections with mobile node 520a and/or mobile node 520b, to provide wireless connectivity to mobile system 512 as it travels. To this end, each access point 518 may include at least 1.) a wireless interface to communicate with a mobile node 520 and 2.) an interface to communicate with a gateway 526, denoted "GW" for simplicity. Typically, the connections between access points 518a-518b and gateway 526 are wired connections that use a suitable wired communication protocol, such as Ethernet.

Gateway 526 represents the other end of the backhauling system and provides Layer-3 (L3) routing functions. To do so, gateway 526 may include at least one interface connected to L3-routed network 514, as well as any number of interfaces to communicate with access points 518. For instance, L3-routed network 514 may take the form of the Internet, in many instances, although the techniques herein may be extended to any number of different types of external networks, as desired.

Traditionally, a backhaul system supporting mobile domains/systems relies on the use of multiple tunnels, to convey traffic between the L3 gateway and the mobile domain/system. For instance, as shown, assume that mobile node 520a has formed a wireless connection 528a with access point 518a. Such a connection may be formed using a suitable transmission protocol, such as the Prodigy protocol by Fluidmesh (now Cisco Systems) or another wireless protocol that supports extremely fast handovers. Consequently, mobile node 520a may establish a first tunnel over wireless connection 528a. gateway 516 and access point 518a may form a second tunnel via their connection 526a, likewise. Thus, when access point 518a sends traffic that it receives from mobile node 520a towards gateway 516, it may encapsulate the traffic and tunneled via the first tunnel, which access point 518a then encapsulates for transport via the second tunnel to gateway 516. A similar approach may be taken with respect to wireless connection 528b between mobile node 520b and access point 518b, as well as connection 526b between access point 518b and gateway 516.

In alternative embodiments, a single L2 tunnel may be established between each access point 518 and gateway 516. This tunnel will carry L2 traffic between gateway 516 and the mobile node 520 to which the access point 518 is connected. For instance, a first L2 tunnel may be formed between gateway 516 and access point 518a over which traffic conveyed between access point 518a and mobile node 520a may be transported, assuming that wireless connection 528a exists. Similarly, another gateway 516 and access point 518b may form a second L2 tunnel over which traffic conveyed between access point 518b and mobile node 520b may be transported, assuming that wireless connection 528a exists.

Typically, only a single wireless link is active at any given time between a mobile system, such as mobile system 512, and any given access point 518. For instance, assume that mobile node 520a is wirelessly connected to access point 518a. In such a case, any other mobile node 520 on mobile system 512 (e.g., mobile node 520b, etc.) may be in an idle state at that time. In other words, one of the mobile nodes (e.g., mobile node 520a) may be designated as the primary, while the other is designated as the secondary (e.g., mobile node 520b) and remains idle. As mobile system 512 roams, the primary node may begin passing its traffic to the secondary node, to begin leveraging its own connection to the fixed infrastructure. In turn, the roles of the two nodes may be switched, thereby making mobile node 520a the secondary node and mobile node 520b the primary node.

Similar to the instance in FIG. 5A, duplicated packets may be sent by mobile nodes 520 to different access points 518. For instance, in the case in which mobile system 512 includes only a single onboard mobile node 520 (e.g., mobile node 520a), that node may send duplicated packets to multiple access points, such as access points 518a-518b. In other cases, such packet replication can be coordinated between the onboard mobile nodes 520, such as by mobile node 520a sending one copy of a packet towards access point 518a and mobile node 520b sending another copy of that packet towards access point 518b.

As would be appreciated, whenever there is duplication of packets sent via different network paths, to ensure that at least one of the duplicated packets is received, there is also the likelihood of multiple copies being received by a networking device. Accordingly, a deduplication mechanism may be employed to eliminate/de-duplicate any redundant packets received. To do so, the sending networking device may assign a sequence number to the duplicated packets, allowing the de-duplicating device to determine whether it has already received a copy of a given packet. If so, that device may simply drop the redundant packet, since it has already received a copy of that same packet that has the same sequence number.

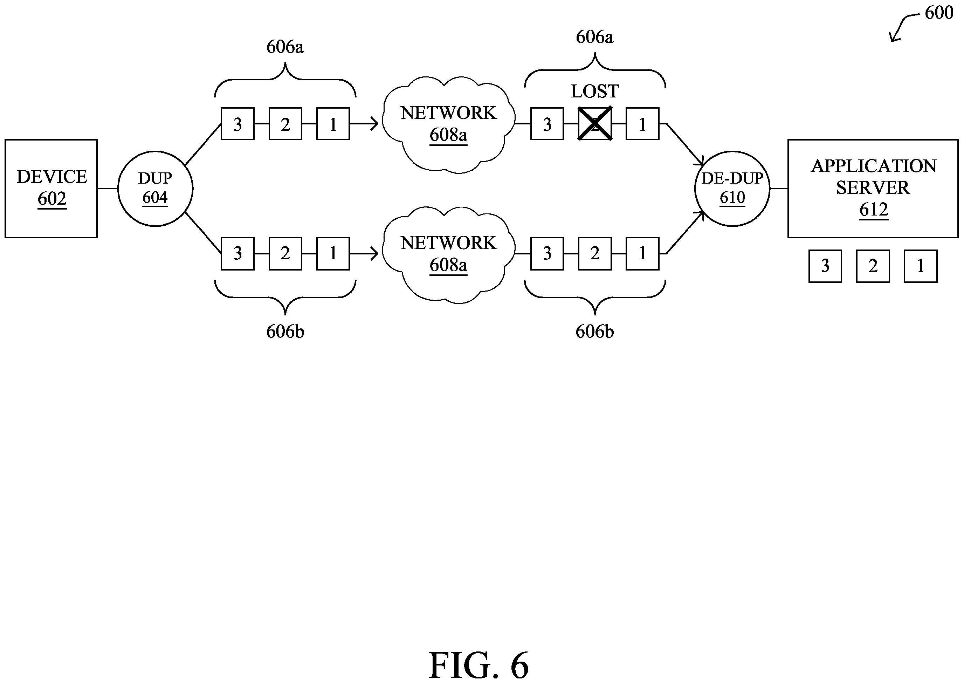

By way of example, FIG. 6 illustrates an example 600 of the deduplication of packets, according to various embodiments. As shown, assume that a device (e.g., node 502) duplicates and sends packets wirelessly via two different paths (e.g., to two different APs). In doing so, it may also add sequence numbers to the packets, with each copy of a given packet receiving the same sequence number.

On the receiver side, a deduplication mechanism may assess the sequence number of the received packets, to determine whether a received packet is a copy/duplicate of an already received packet. For instance, assume that both copies of the packet with the sequence number '1' are received. In such a case, the deduplication mechanism may drop or ignore one of the two copies, so that only a single copy is sent to the destination application server.

As shown, no deduplication is needed in cases in which only a single copy of a packet is received. For instance, a copy of the packet with the sequence number '2' may be lost during transmission. However, the other copy of the packet was still received, meaning that the packet can still be sent to the destination application server and demonstrating the additional reliability of using a multipath approach.

As would be appreciated, the choice of the duplication/deduplication algorithm is extremely important. Generally, they need to be able to 1.) address packet loss and asymmetric high/variable delay paths, 2.) not introduce additional packet delay (e.g., due to buffering), 3.) be able to eliminate duplicate, out of sequence packets, and 4.) be resource efficient.

Today, current approaches to duplication/deduplication are known to "leak" duplicate and out of sequence packets, especially under high traffic conditions. In addition, some packets may be dropped even though they were received successfully. This can happen, for instance, if a significantly higher sequence numbered packet is received first on a channel (e.g., due to high skew/delays between channels, high loss on one channel, etc.).

### -- Packet Sequencing and Deduplication in Multipath Wireless Networks --

The techniques introduced can help to ensure packet delivery to an endpoint via a multipath wireless network. In some aspects, the sequence number of a packet may be based on the identity of the sender, as well as the flow identifier for the packet. This helps to ensure that duplicate packets are not received significantly out of order, leading to legitimate packets being eliminated.

Illustratively, the techniques described herein may be performed by hardware, software, and/or firmware, such as in accordance with the communication process 248, which may include computer executable instructions executed by the processor 220 (or independent processor of interfaces 210) to perform functions relating to the techniques described herein.

Specifically, according to various embodiments, a device in a network receives a packet from a sender that is destined for a receiver. The device forms duplicate packets of the packet. The device assigns a sequence number to the duplicate packets based on an identity of the sender and on a flow identifier associated with the packet. The device sends the duplicate packets with the sequence number via different paths in the network towards the receiver.

Operationally, according to various embodiments, the techniques herein propose a duplication/deduplication mechanism that operates by partitioning the sequence numbers used into different number spaces. Rather than simply number the sent packets sequentially, the sequence numbers may be based on:
1. Their sending host (e.g., per-MAC address) and
2. Their flow (e.g., per-flow).

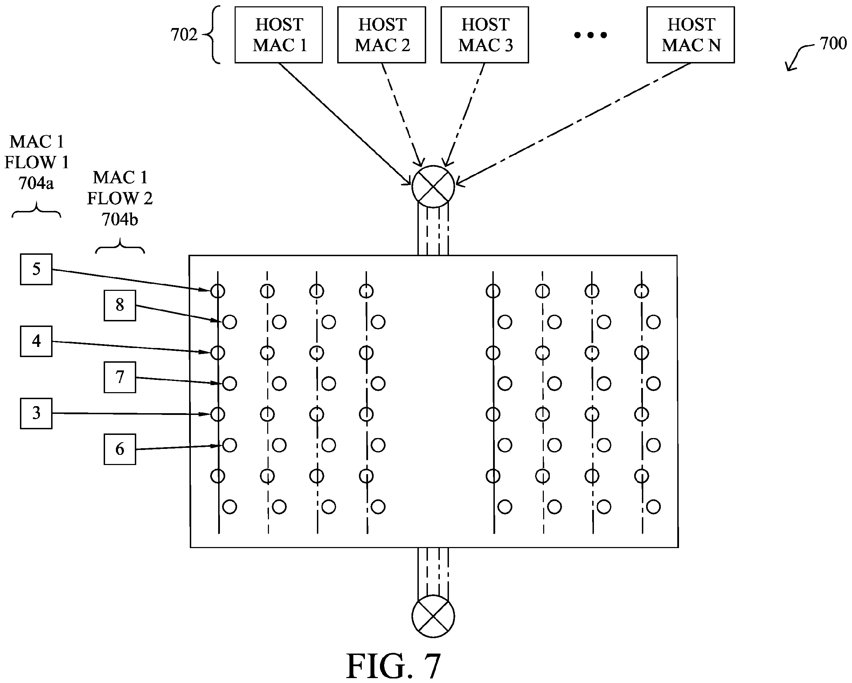

FIG. 7 illustrates an example 700 of such per-host, per-flow packet sequencing, according to various embodiments. As shown, assume that there are N-number of hosts 702 in the network, each having its own MAC address. Sequencing of the duplicated packets to be sent from any of hosts 702 may be accomplished as follows:
1.) Different blocks of sequence numbers may be pre-allocated or pre-selected by the device performing the sequencing and/or packet duplication.
2.) When a packet is to be sequenced, the device may identify a corresponding block of sequence numbers, based on the identity of its sender (e.g., based on the MAC address of its sending host 702 or another identifier), as well as its flow identifier.
3.) The device then selects the next available sequence number from the identified block and associates that sequence number with the duplicates of the packet.

For example, as shown, assume that host 702 having MAC address '1' sends a series of packets, some belonging to a first flow and others belonging to a second flow. In such a case, those packets 704a having flow identifier `1' from MAC address `1' may be assigned sequence numbers from a first block of numbers, such as {3, 4, 5}. In addition, those packets 704b having flow identifier '2' from MAC address '2' may be assigned sequence numbers from a second block of numbers, such as {6, 7, 8}. Of course, the amount of offset between the blocks of sequence numbers may be varied, as desired.

By sequencing the duplicated packets on both a per-host and per-flow basis, this essentially creates 'insulation' between them. Consequently, a sudden jump in the sequence number of one flow does not imply a similar increment in other flows, due to flow timing and volume variability. In various embodiments, this partitioning can also be performed on a sub-flow basis, as well.

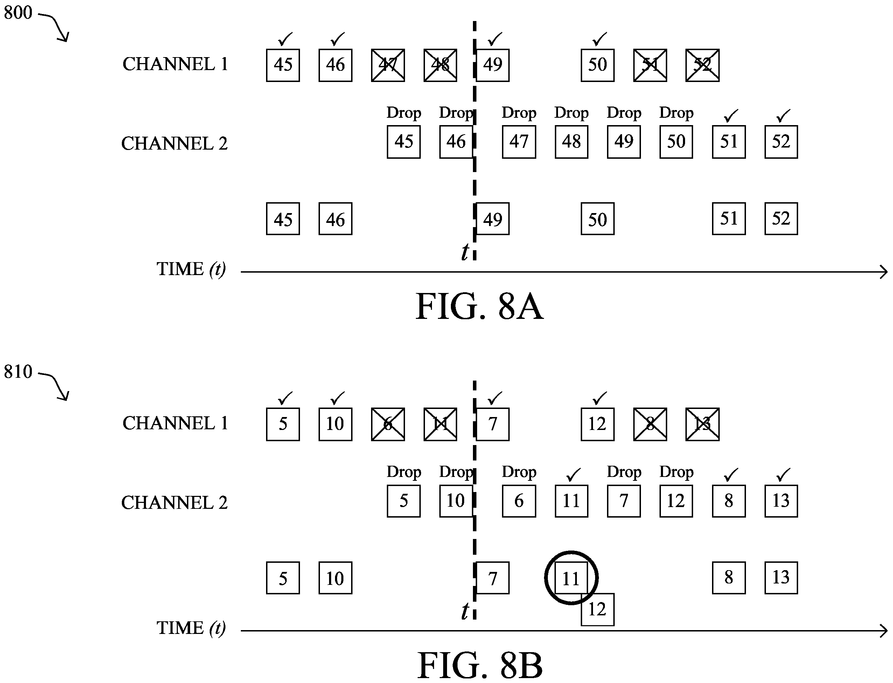

FIGS. 8A-8B illustrate examples comparing single aggregated packet sequencing to flow-based packet sequencing. More specifically, FIG. 8A illustrates an example 800 of single aggregated packet sequencing whereby duplicated packets are sent using a single set of sequence numbers. In contrast, FIG. 8B illustrates an example 810 using the per-host, per-flow sequencing approach introduced herein. In both cases, each packet is duplicated, assigned a sequence number, and the duplicates are sent via different network paths (e.g., over wireless paths on different channels 1 and 2).

As shown in FIGS. 8A-8B, assume now that the packets received via the first path (on channel 1) are typically received sooner than those received via the second path (on channel 2). Consequently, as shown in FIG. 8A, by time t shown, the following packets may have been received:
- A copy of packet 45 received via channel 1 (kept)
- A copy of packet 46 received via channel 1 (kept)
- A subsequent copy of packet 45 received via channel 2 (dropped)
- A subsequent copy of packet 46 received via channel 2 (dropped)

In addition, by time t, the following packets may have been lost during transmission:
- A copy of packet 47 sent via channel 1
- A copy of packet 48 sent via channel 1

Now, when packet 49 is received via channel 1 at time t, the deduplication algorithm will assume that its sequence number is the next number in the series and opt to keep that copy of packet 49. Thus, when packet 47 is received via channel 2, due to its additional delay, the receiver will drop this packet, since it is now out of sequence. The same happens for packet 48, which was also lost during transmission via channel 1. The end result is that packets 47-48 are excluded from the final set of packets sent to the destination.

In various embodiments, as shown in FIG. 8B, the techniques herein propose instead using two different sets of sequence numbers for the two sub-flows being sent by the sending node: the first beginning with sequence number '5' and the second beginning with sequence number '10.' This leads to the following changes in the sequencing, in comparison to the top example:
- Packet 45 → Packet 5
- Packet 46 → Packet 10
- Packet 47 → Packet 6
- Packet 48 → Packet 11
- Packet 49 → Packet 7
- Etc.

As a result, at time t, even though the packets from the first sub-flow are still received out of order, this has no bearing on the packets from the second sub-flow. This means that packet 11 (i.e., packet 48 at the top) will no longer be dropped, as it would in the top case.

To implement the techniques herein, the following modifications are proposed:

**Table 1**

| Current Sequence Number Tracking Table | Enhanced Sequence Number Tracking Table |
|---|---|
| Key = SMAC (source MAC) | Key = SMAC + Other Fields |
| | Other Fields: DMAC (destination MAC), ETHERTYPE, <VLANID>, <SRCIP>, <DSTIP>, <IPPROTO>, <SPORT>,<DPORT> |

According to various embodiments, separate tracking tables may also be kept for different types of traffic (e.g., Layer 2 vs. Layer 3 traffic types). This has the benefit of reducing memory usage, and making the look-ups faster. For example:
1. IPv4 table: Key: SMAC|DMAC|VLANID|SRCIP|DSTIP|SPORT|DPORT
2. IPv6 table: Key: Same format as IPv4 but different size due to 128-bit IPv6 addresses.
3. All other L2 (etherype is NOT 0x0800 or Ox86DD): Key: SMAC|DMAC|ETHERTYPE|<VLANID>

The per-host, per-flow sequence numbering scheme can also be combined with a selectable duplication/deduplication algorithm (e.g., bitmap/list based), in some embodiments. This can be useful when it is known that the application protocol is resilient to out of order and/or duplicate packets and, therefore, can benefit from a more "relaxed" duplicate-discard algorithm providing improved reliability.

With this scheme different flows may even use different duplicate-discard algorithms at the same time. For example, flows for protocols that are resilient to out of sequence or duplicate packets may use "relaxed" duplicate-discard algorithms, whereas all the rest of flows may use stricter/default duplicate-discard algorithm.

In summary, the per-host, per-flow sequencing scheme introduced herein helps to minimize the number of flows that may get mis-ordered and potentially dropped. In addition, it also allows for different flows to use different duplicate-discard algorithms (strict or relaxed) at the same time. This could be automatic or done via configuration. Additional incremental reliability can also be achieved using the techniques herein, such as by using a relaxed duplicate/discard algorithm for some flows, while maintaining correctness for other flows. Performance is also improved due to smaller windows and any "leaked" out-of-sequence/duplicate packets will be localized to specific flows, only.

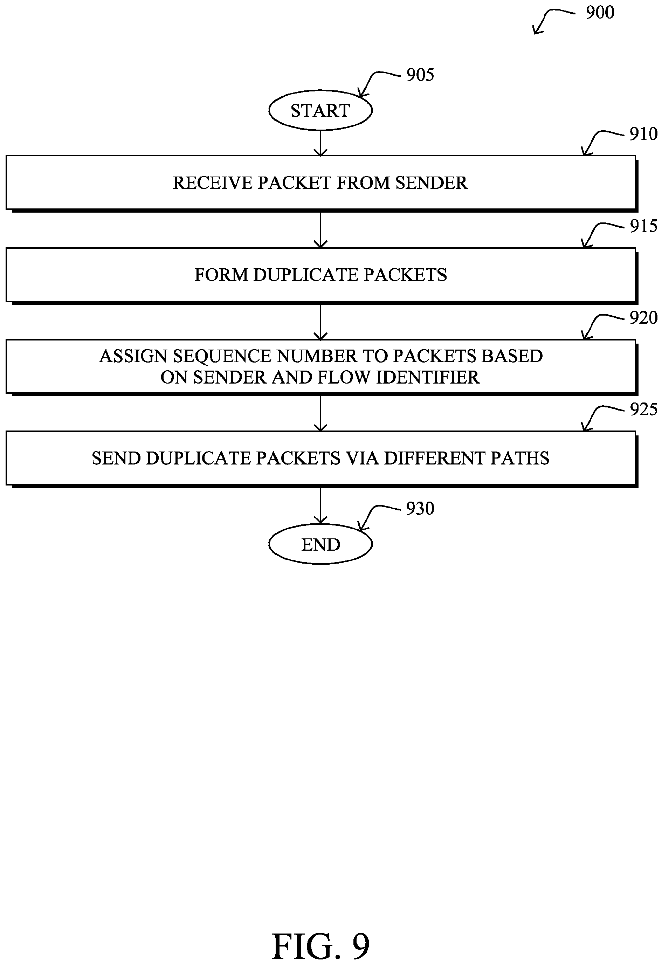

FIG. 9 illustrates an example simplified procedure for packet sequencing and deduplication in multipath wireless networks, in accordance with one or more embodiments described herein. In various embodiments, procedure 900 may be performed by a device in a network (e.g., a device 200 executing communication process 248). As shown, procedure 900 may start at step 905 and continue on to step 910 where, as described in greater detail above, the device may receive a packet from a sender that is destined for a receiver. In various embodiments, the device is located onboard a moving vehicle. For instance, the moving vehicle may be a train, automobile, an autonomous or semi-autonomous robot, or the like.

At step 915, as detailed above, the device may form duplicate packets of the packet. To do so, in some embodiments, the device may copy at least the payload of the packet into one or more new packets.

At step 920, the device may assign a sequence number to the duplicate packets based on an identity of the sender and on a flow identifier associated with the packet, as described in greater detail above. In some embodiments, the identity of the sender comprises a Media Access Control (MAC) address of the sender. In one embodiment, the device may also assign a second sequence number to a second packet received from the sender, whereby the device selects the second sequence number from a different range of numbers than that of the sequence number assigned to the packet based on the second packet having a different flow identifier than that of the second packet, and send duplicates of the second packet with the second sequence number towards the receiver via the different paths. In another embodiment, the device may assign a second sequence number to a second packet received from a second sender, wherein the device selects the second sequence number from a different range of numbers than that of the sequence number assigned to the packet based in part on an identity of the second sender.

At step 925, as detailed above, the device may send the duplicate packets with the sequence number via different paths in the network towards the receiver. In some embodiments, the different paths comprise wireless paths in the network that are on different wireless channels. In one embodiment, the different paths comprise different wireless access points. In some embodiments, the receiver eliminates one of the duplicate packets based on the sequence number.

Procedure 900 then ends at step 930.

It should be noted that while certain steps within procedure 900 may be optional as described above, the steps shown in FIG. 9 are merely examples for illustration, and certain other steps may be included or excluded as desired. Further, while a particular order of the steps is shown, this ordering is merely illustrative, and any suitable arrangement of the steps may be utilized without departing from the scope of the embodiments herein.

The techniques described herein, therefore, provide for ultra-reliable communications in a wireless network through the use of multiple radios onboard a mobile node and path diversity between the node and multiple access points of the network, and in a manner that helps to reduce collisions. In some aspects, packet sequencing techniques are introduced herein that are on a per-host, per-flow basis, thereby reducing or eliminating the effects of performance discrepancies between different paths.

While there have been shown and described illustrative embodiments that provide for packet sequencing and deduplication in multipath wireless networks, it is to be understood that various other adaptations and modifications may be made within the intent and scope of the embodiments herein. For example, while the techniques herein are described with respect to certain types of wireless networks, the techniques herein are not limited as such and can be used in any other form of wireless network, as desired. Further, while certain protocols are used herein for illustrative purposes, the techniques herein can also be implemented using other suitable protocols, as well.

The foregoing description has been directed to specific embodiments. It will be apparent, however, that other variations and modifications may be made to the described embodiments, with the attainment of some or all of their advantages. For instance, it is expressly contemplated that the components and/or elements described herein can be implemented as software being stored on a tangible (non-transitory) computer-readable medium (e.g., disks/CDs/RAM/EEPROM/etc.) having program instructions executing on a computer, hardware, firmware, or a combination thereof. Accordingly, this description is to be taken only by way of example and not to otherwise limit the scope of the embodiments herein. Therefore, it is the object of the appended claims to cover all such variations and modifications as come within the true intent and scope of the embodiments herein.

## Claims

1. A method comprising:
receiving, at a device in a network, a packet from a sender that is destined for a receiver;
forming, by the device, duplicate packets of the packet;
assigning, by the device, a sequence number to the duplicate packets based on an identity of the sender and on a flow identifier associated with the packet; and
sending, by the device, the duplicate packets with the sequence number via different paths in the network towards the receiver.

2. The method as in claim 1, wherein the identity of the sender comprises a Media Access Control (MAC) address of the sender.

3. The method as in claim 1 or 2, wherein the different paths comprise wireless paths in the network that are on different wireless channels, optionally wherein the different paths comprise different wireless access points.

4. The method as in any of claims 1 to 3, wherein the device is located onboard a moving vehicle, optionally wherein the moving vehicle is a train, an automobile, an autonomous robot or a semi-autonomous robot.

5. The method as in any of claims 1 to 4, wherein the receiver eliminates one of the duplicate packets based on the sequence number.

6. The method as in any of claims 1 to 5, further comprising:
assigning, by the device, a second sequence number to a second packet received from the sender, wherein the device selects the second sequence number from a different range of numbers than that of the sequence number assigned to the packet based on the second packet having a different flow identifier than that of the second packet; and
sending, by the device, duplicates of the second packet with the second sequence number towards the receiver via the different paths.

7. The method as in any of claims 1 to 6, further comprising:
assigning, by the device, a second sequence number to a second packet received from a second sender, wherein the device selects the second sequence number from a different range of numbers than that of the sequence number assigned to the packet based in part on an identity of the second sender.

8. Apparatus comprising:
means for receiving a packet from a sender that is destined for a receiver;
means for forming duplicate packets of the packet;
assigning a sequence number to the duplicate packets based on an identity of the sender and on a flow identifier associated with the packet; and
sending the duplicate packets with the sequence number via different paths in the network towards the receiver.

9. The apparatus according to claim 8 further comprising means for implementing the method according to any of claims 2 to 7.

10. A computer program, computer program product or computer readable medium comprising instructions which, when executed by a computer, cause the computer to carry out the steps of the method of any of claims 1 to 7.

11. An apparatus, comprising:
one or more network interfaces to communicate with a network;
a processor coupled to the one or more network interfaces and configured to execute one or more processes; and
a memory configured to store a process that is executable by the processor, the process when executed configured to:
receive a packet from a sender that is destined for a receiver;
form duplicate packets of the packet;
assign a sequence number to the duplicate packets based on an identity of the sender and on a flow identifier associated with the packet; and
send the duplicate packets with the sequence number via different paths in the network towards the receiver.

12. A tangible, non-transitory, computer-readable medium storing program instructions that cause a device in a network to execute a process comprising:
receiving, at the device, a packet from a sender that is destined for a receiver;
forming, by the device, duplicate packets of the packet;
assigning, by the device, a sequence number to the duplicate packets based on an identity of the sender and on a flow identifier associated with the packet; and
sending, by the device, the duplicate packets with the sequence number via different paths in the network towards the receiver.
